# EUROPEAN PATENT APPLICATION

(11) **EP 4 675 699 A1**
(43) Date of publication of application: **07.01.2026**
(21) Application number: 24868639.6
(22) Date of filing: 13.09.2024
(51) Int. Cl.: H01M 4/134, H01M 4/66, H01M 4/38, H01M 10/052, H01M 4/02

(54) **ANODE FOR SECONDARY BATTERY AND SECONDARY BATTERY INCLUDING SAME**

(30) Priority: 18.09.2023 KR 20230124313
(71) Applicant: LG ENERGY SOLUTION, LTD., Seoul 07335 (KR)
(72) Inventor: KIM, Yun-Jung, Daejeon 34122 (KR); KIM, Myeong-Seong, Daejeon 34122 (KR); SONG, Ji-Eun, Daejeon 34122 (KR); LEE, Hyun-Soo, Daejeon 34122 (KR); KIM, Ki-Hyun, Daejeon 34122 (KR)
(74) Representative: Goddar, Heinz J.
(86) International application number: PCT/KR2024/014036
(87) International publication number: WO 2025/063662

(57) **Abstract**

A negative electrode for a secondary battery according to the present disclosure includes a porous polymer substrate and a negative electrode active material loaded into the porous polymer substrate, wherein the porous polymer substrate has a lattice structure including a line portion and an open portion, wherein each open portion of the porous polymer substrate is filled with the negative electrode active material in whole or in at least part, and wherein the negative electrode active material includes at least one of a lithium metal or a lithium alloy.

The negative electrode for the secondary battery including the porous polymer substrate of the lattice structure may have high mechanical strength, and suppress dendrite formation on the negative electrode and volume expansion of the negative electrode during charging and discharging.

## Description

### TECHNICAL FIELD

The present disclosure relates to a negative electrode for a secondary battery and a secondary battery including the same.

This application is based on and claims priority from Korean Patent Application No. 10-2023-0124313, filed on September 18, 2023, with the Korean Intellectual Property Office, the disclosure of which is incorporated herein in its entirety by reference.

### BACKGROUND

With the technology development and growing demand for mobile devices, the demand for secondary batteries as an energy source is dramatically increasing, and among secondary batteries, lithium secondary batteries having high energy density and operating potential and low self-discharge rate have been commercialized.

Lithium metal secondary batteries are the first commercialized lithium secondary battery, and lithium metal is used as the negative electrode. However, due to lithium dendrite on the surface of the lithium metal negative electrode, problems are arising from lithium metal secondary batteries, such as cell volume expansion, gradual decline in capacity and energy density, short circuits caused by continuous growth of dendrite, cycle life reduction, and cell stability issue (explosion and ignition), and their production was stopped only a few years after commercialization. Instead of lithium metal, carbon-based negative electrode was used. Because carbon-based negative electrode is more stable and can stably store the ionic form of lithium in lattices or voids, the use of the carbon-based negative electrode put lithium secondary batteries into practical and widespread use.

Up to now, lithium secondary batteries mainly include carbon-based or non-carbon-based negative electrode materials, and in most cases, the development of negative electrode materials is focused on carbon-based materials (graphite, hard carbon, soft carbon, etc.) and non-carbon-based materials (silicon, tin, titanium oxide, etc.). However, the theoretical capacity of carbon-based materials does not exceed 400 mAh/g, and non-carbon-based materials are materials whose theoretical capacity exceeds 1000 mAh/g, but they have problems with volume expansion and performance degradation during charging and discharging.

Meanwhile, with the widespread use of medium- and large-sized lithium secondary batteries, high capacity and high energy density characteristics are required, but existing carbon-based or non-carbon-based negative electrode materials are inadequate to meet the performance requirements.

In these circumstances, more recently, studies are being made to use lithium metal, like lithium-air batteries, and in this trend, lithium metal secondary batteries are gaining attention again. Because lithium is very light and has the theoretical capacity of more than 3800 mAh/g, it has the potential to achieve high energy density.

However, to use lithium metal as negative electrode materials of secondary batteries, there are challenges. First, as opposed to graphite-based negative electrode materials, in the case of lithium metal negative electrode, the ionic form of lithium released from the positive electrode is changed to neutral lithium through electrochemical reaction with electrons from an external conductor, to form very irregular lithium deposits in dendrite shape on the lithium surface during charging. The uneven surface causes the overall volume expansion, and during discharging, ions are more often dissociated directly from lithium metal than selectively detached from lithium dendrite, so the lithium metal negative electrode surface experiences very severe volume changes during a series of charge and discharge cycles, and the dendrite exhibits irregular and complex morphology. This complex aspect of the surface is not stabilized over cycles, resulting in very irregular cycle life by repeated deposition and dissolution. In addition, lithium dendrite formed during discharging may be dissociated and eluted into the electrolyte solution, or dendrite may continue to grow in the vertical direction, and directly or indirectly contact the positive electrode surface on the opposite side through the separator, causing a short circuit.

In addition, because lithium metal has low mechanical strength, in the manufacture of a free-standing type lithium metal negative electrode without a current collector, defects often occur in the manufacturing process. To solve this problem, attempts have been made to laminate a lithium metal foil on a current collector, but in this case, the energy density of the battery is significantly reduced due to the weight of the current collector.

### DISCLOSURE

### Technical Problem

To solve the above-described problem, the present disclosure is directed to provide a negative electrode for a secondary battery with high mechanical strength.

The present disclosure is further directed to provide a secondary battery including the negative electrode, with improved life characteristics and high energy density.

### Technical Solution

To solve the above-described problem, an aspect of the present disclosure provides a negative electrode for a secondary battery and a secondary battery of the following embodiments.

The negative electrode for the secondary battery according to a first embodiment includes:
a porous polymer substrate and a negative electrode active material,
wherein the porous polymer substrate has a lattice structure including a line portion and an open portion,
wherein each open portion of the porous polymer substrate is filled with the negative electrode active material in whole or in at least part, and
wherein the negative electrode active material includes at least one of a lithium metal and a lithium alloy.

According to a second embodiment, in the first embodiment,
the negative electrode for the secondary battery may be a free-standing type without a current collector.

According to a third embodiment, in the first or second embodiment,
the porous polymer substrate may have a line spacing of the line portion between 80 µm and 400 µm.

According to a fourth embodiment, in any one of the first to third embodiments,
the porous polymer substrate may have a line width of the line portion between 10 µm and 40 µm.

According to a fifth embodiment, in any one of the first to fourth embodiments,
the lattice structure may have a fixed structure having a constant spacing between the line portions.

According to a sixth embodiment, in any one of the first to fifth embodiments,
a thickness of the porous polymer substrate may range from 20 µm to 100 µm.

According to a seventh embodiment, in any one of the first to sixth embodiments,
the porous polymer substrate may include polyester, polyolefin, polyethylene terephthalate or a mixture thereof.

According to an eighth embodiment, in any one of the first to seventh embodiments,
the negative electrode may include the negative electrode active material loaded into 90 vol% or more of the open portion based on a total volume of the open portion of the porous polymer substrate.

According to a ninth embodiment, in any one of the first to eighth embodiments,
at least part of the line portion may be exposed to an outside on one surface or two surfaces of the negative electrode.

According to a tenth embodiment, in any one of the first to eighth embodiments,
the porous polymer substrate may be buried in the negative electrode active material.

According to an eleventh embodiment, in any one of the first to eighth embodiments,
the line portion may not be exposed on one surface of the negative electrode and may be exposed wholly or locally on an opposite surface.

According to a twelfth embodiment, in any one of the first to eighth embodiments, at least part of the porous polymer substrate may be included in the negative electrode active material.

According to a thirteenth embodiment, in any one of the first to eighth embodiments,
80 wt% or more of the porous polymer substrate may be included in the negative electrode active material.

The secondary battery according to a fourteenth embodiment includes:
a positive electrode; a negative electrode; and a separator interposed between the positive electrode and the negative electrode,
wherein the negative electrode is defined in any one of the first to thirteenth embodiments, and
wherein the positive electrode includes sulfur as a positive electrode active material.

According to a fifteenth embodiment, in the fourteenth embodiment,
the positive electrode may include a sulfur-carbon composite as the positive electrode active material.

According to a sixteenth embodiment, in the fourteenth or fifteenth embodiment,
the secondary battery may be a lithium-sulfur battery.

### Advantageous Effects

The negative electrode for the secondary battery according to an aspect of the present disclosure is a free-standing type electrode without a current collector, and the secondary battery including the negative electrode for the secondary battery may have high energy density.

The negative electrode for the secondary battery according to an aspect of the present disclosure includes the negative electrode active material loaded into the porous polymer substrate, leading to high mechanical strength. Therefore, it may be possible to suppress the volume change of the negative electrode for the secondary battery, and suppress dendrite growth and nonuniform lithium elution at the negative electrode during charging and discharging. In addition, because the porous polymer may support the negative electrode active material in the negative electrode manufacturing process, it may be possible to improve the manufacturing process efficiency.

### BRIEF DESCRIPTION OF THE DRAWINGS

The accompanying drawings illustrate the exemplary embodiments of the present disclosure and together with the foregoing disclosure, serve to provide a better understanding of the technical aspect of the present disclosure, and thus the present disclosure is not construed as being limited to the drawings. In the drawings, for clarity of description, the shape, size, scale or proportion of the elements may be exaggerated for emphasis.
FIG. 1 is a diagram of a porous polymer substrate according to an embodiment of the present disclosure.
FIG. 2 is a cross-sectional view of a negative electrode for a secondary battery according to an embodiment of the present disclosure.
FIG. 3a is a diagram showing a method for manufacturing a negative electrode for a secondary battery according to an embodiment of the present disclosure.
FIG. 3b is a diagram showing a method for manufacturing a negative electrode for a secondary battery according to an embodiment of the present disclosure.
FIG. 3c is a diagram showing a method for manufacturing a negative electrode for a secondary battery according to an embodiment of the present disclosure.
FIG. 4 shows the cycle life of a lithium-sulfur battery according to an example of the present disclosure and a comparative example.
FIG. 5 shows the Coulombic efficiency of a lithium-sulfur battery according to an example of the present disclosure and a comparative example.
FIG. 6 shows an increase in negative electrode thickness of a lithium-sulfur battery according to an example of the present disclosure and a comparative example.

### BEST MODE

Hereinafter, the present disclosure will be described in detail with reference to the accompanying drawings. It should be understood that the terms used in the specification and the appended claims should not be construed as limited to general and dictionary meanings, and rather, should be interpreted based on the meanings and concepts corresponding to technical aspects of the present disclosure on the basis of the principle that the inventor is allowed to define terms appropriately for the best explanation.

Accordingly, the embodiments described herein and the illustration in the drawings are provided to describe the present disclosure by way of example but not intended to be limiting, so it should be understood that other equivalents and modifications could have been made thereto at the time the application was filed.

It should be further understood that "comprise", "include" or "have" when used in the specification, specifies the presence of stated elements and does not preclude the presence or addition of one or more other elements unless expressly stated otherwise.

In the specification, 'A and/or B' as used herein refers to either A or B or both.

Unless stated otherwise, the temperature as used herein refers to Celsius scale of temperature, and its unit is °C.

A negative electrode for a secondary battery according to an aspect of the present disclosure includes:
a porous polymer substrate and a negative electrode active material,
wherein the porous polymer substrate has a lattice structure including a line portion and an open portion,
wherein each open portion of the porous polymer substrate is filled with the negative electrode active material in whole or in at least part, and
wherein the negative electrode active material includes at least one of a lithium metal and a lithium alloy.

When lithium metal is used as a negative electrode, the negative electrode suffers from severe volume changes and nonuniform lithium deposition, inducing dendrite formation, during charging and discharging. In addition, low mechanical strength of lithium metal causes low process efficiency in the process of manufacturing the negative electrode.

However, the negative electrode for the secondary battery according to the present disclosure includes the negative electrode active material filled in the open portion of the porous polymer substrate of the lattice structure. Therefore, because the porous polymer substrate of the lattice structure supports the negative electrode active material, the lithium metal and/or the lithium alloy having low mechanical strength is used as the negative electrode active material, but it may be possible to achieve high process efficiency. In addition, because the porous polymer substrate suppresses volume changes of the lithium metal and/or the lithium alloy and facilitates uniform lithium deposition, it may be possible to improve the life characteristics of the negative electrode.

In an embodiment of the present disclosure, the negative electrode for the secondary battery may be a free-standing type electrode without a current collector, i.e., a negative electrode active material layer is not supported by a current collector and the negative electrode only includes a negative electrode active material layer. A secondary battery including the free-standing type negative electrode may have high energy density.

The porous polymer substrate according to the present disclosure has the lattice structure including the line portion and the open portion. In the specification, the line portion is the lattice part of the porous polymer substrate and corresponds to the skeleton of the porous polymer substrate. Additionally, the open portion refers to an empty space between the line portions. The porous polymer substrate is a structure that passes from one side to the other side with the open portion positioned between them.

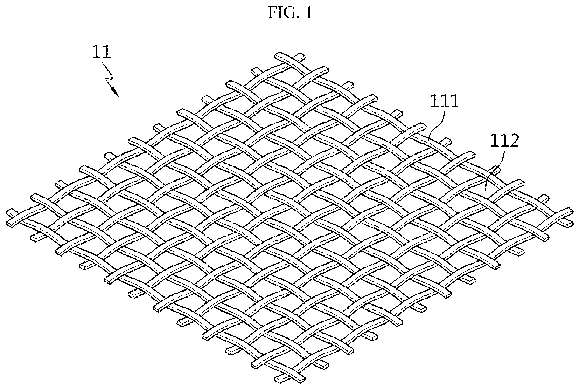

FIG. 1 is a diagram showing the porous polymer substrate 11 according to the present disclosure. Referring to FIG. 1, the porous polymer substrate 11 is the lattice structure including the line portion 111 of polymer and the open portion 112 or the empty space between the line portions.

In an embodiment of the present disclosure, the line spacing of the line portion of the porous polymer substrate may ranges from 80 µm to 400 µm, from 100 µm to 400 µm, from 120 µm to 350 µm, or from 120 µm to 300 µm. When the line spacing of the line portion lies in the aforementioned range, the negative electrode active material may be smoothly loaded into the open portion of the porous polymer substrate, and the porous polymer may have sufficient mechanical strength.

The line spacing of the line portion may refer to a shortest distance between the adjacent line portions arranged in parallel.

In an embodiment of the present disclosure, the line width of the line portion of the porous polymer substrate may range from 10 µm to 40 µm, from 10 µm to 30 µm, from 15 µm to 40 µm, from 15 µm to 35 µm, from 20 µm to 35 µm, or from 20 µm to 30 µm. When the line width of the line portion lies in the aforementioned range, it may be possible to achieve sufficient mechanical strength of the porous polymer substrate, sufficiently support the negative electrode active material loaded into the porous polymer substrate, and suppress volume changes of the negative electrode active material occurring during charging and discharging.

In an embodiment of the present disclosure, the lattice structure of the porous polymer substrate may be a regular structure. The regular structure does not represent that the line spacing of the line portion is equal, and may represent that the line spacing of the line portion has a certain range.

For example, the line spacing may be 20% or less, 15% or less, 10% or less, 5% or less, or 3% or less of the average line spacing of the entire line portion. Here, the line spacing may be determined using a scanning electron microscopy (SEM) image, and the average of 10 or 20 different line spacings may be the average line spacing of the entire line portion.

When the line spacing lies in the aforementioned range, the porous polymer substrate may uniformly support the filled negative electrode active material from different directions. As a result, it may be possible to uniformly suppress volume expansion of the negative electrode active material from different directions, and uniformly suppress dendrite formation on the surface of the negative electrode active material.

In an embodiment of the present disclosure, the porous substrate may have weight per unit area ranging from 0.2 mg/cm² to 2.5 mg/cm². When the weight per unit area of the porous substrate lies in the aforementioned range, it may be possible to achieving the mechanical strength of the negative electrode and sufficient energy density of the secondary battery including the negative electrode.

In an embodiment of the present disclosure, the thickness of the porous polymer substrate may range from 20 µm to 100 µm. When the thickness of the porous polymer substrate lies in the aforementioned range, the negative electrode active material may be sufficiently filled in the open portion of the porous polymer substrate, it may be possible to achieve sufficient capacity of the negative electrode, and sufficient mechanical strength of the negative electrode.

In an embodiment of the present disclosure, the porous polymer substrate may not physically and chemically react with the lithium metal and/or the lithium alloy. For example, the porous polymer substrate may include polyester, polyolefin, polyethylene terephthalate, or a mixture thereof. Specifically, the polyolefin may include polyethylene, polypropylene, polybutene, polypentene, polymethylpentene, polybutene-1, polyolefin elastomer, polyisobutylene, or a mixture thereof.

In an embodiment of the present disclosure, with respect to the total volume of open portion of the porous polymer substrate, the negative electrode active material may be loaded into 90 vol% or more, 95 vol% or more, or 98 vol% or more of the open portion, and the open portion may be filled with 100 vol% of the negative electrode active material. In the present disclosure, because the porous polymer substrate supports the negative electrode active material, as the amount of the negative electrode active material filled in the open portion of the porous polymer substrate increases, the energy density of the secondary battery including the negative electrode according to the present disclosure may increase.

The negative electrode for the secondary battery according to the present disclosure may be formed by stacking a negative electrode active material layer on at least one surface of the porous polymer substrate and applying pressure to the stack.

In addition, the negative electrode for the secondary battery formed by applying pressure to the stack may include the porous polymer substrate buried in the negative electrode active material.

For example, the negative electrode active material may be filled in the open portion of the porous polymer substrate, and the exterior of the porous polymer substrate may be completely covered with the negative electrode active material. In addition, in the negative electrode for the secondary battery formed by applying pressure to the stack, at least part of the line portion on one or two surfaces of the porous polymer substrate may be exposed to the outside. For example, on one surface, the line portion of the porous polymer substrate is not exposed, and on the opposite surface, the line portion may be exposed wholly or locally. Preferably, the entire porous polymer substrate is not exposed to the outside and may be buried in the negative electrode active material. When the entire surface of the negative electrode comprises the negative electrode active material, it may enhance lithium intercalation and deintercalation at the negative electrode in the secondary battery including the negative electrode according to the present disclosure.

That is, the negative electrode for the secondary battery may include the negative electrode active material and the porous polymer substrate included in the negative electrode active material in at least part. In other words, at least part of the porous polymer substrate may be included in the negative electrode active material.

In an embodiment of the present disclosure, 80 wt% or more, 85 wt% or more, 90 wt% or more, or 95 wt% or more of the porous polymer substrate may be included in the negative electrode active material. Preferably, the porous polymer substrate may be completely included in the negative electrode active material.

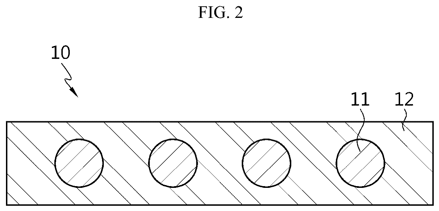

FIG. 2 is a cross-sectional view of the negative electrode 10 for the secondary battery according to the present disclosure. Referring to FIG. 2, the porous polymer substrate 11 is completely buried in the negative electrode active material 12. That is, the porous polymer substrate 11 is completely covered with the negative electrode active material 12.

In an embodiment of the present disclosure, the lithium alloy may be an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

A method for manufacturing the negative electrode for the secondary battery according to an aspect of the present disclosure may include the steps of:
preparing the porous polymer substrate; stacking the negative electrode active material layer on at least one surface of the porous polymer substrate; and applying pressure to the stack. The negative electrode active material layer may include at least one of lithium metal and lithium alloy, and preferably a lithium metal foil.

The step of applying pressure may include rolling using a roll press.

The step of stacking may include, for example, stacking the lithium metal foil on one surface of the porous polymer substrate and applying pressure, or stacking the lithium metal foil on two surfaces of the porous polymer substrate and applying pressure.

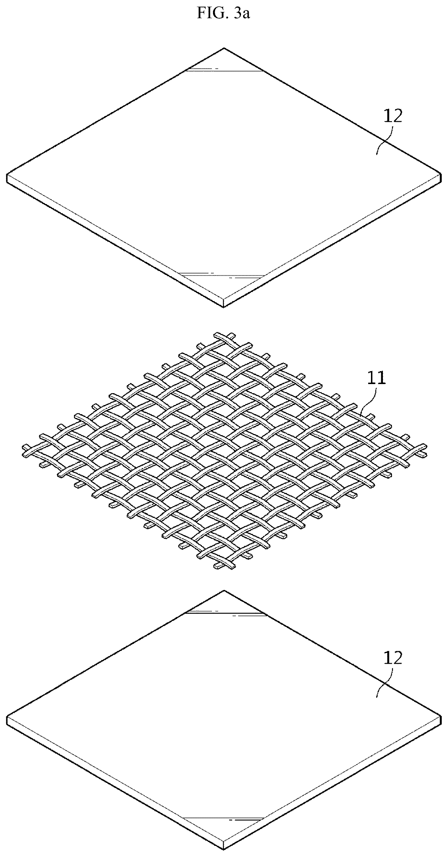

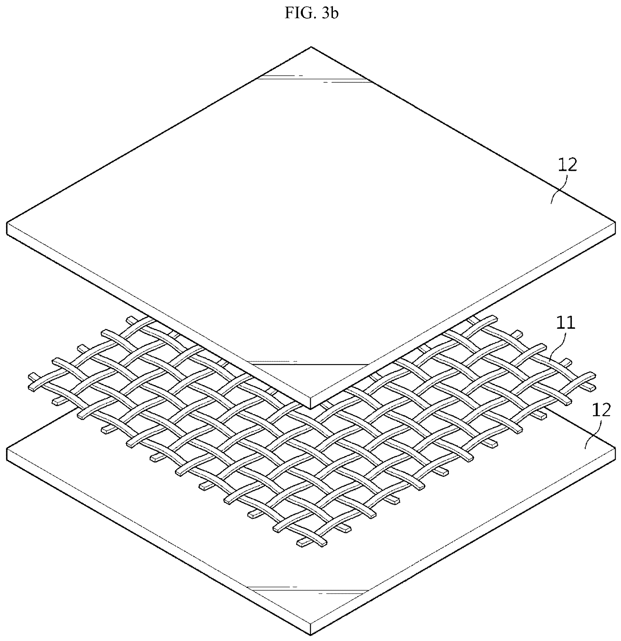

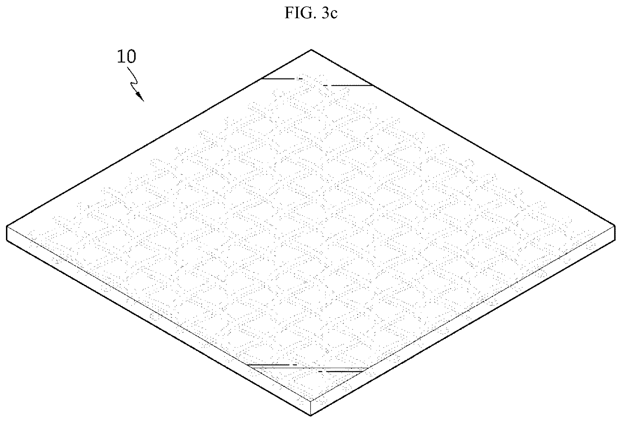

FIGS. 3a to 3c show the method for manufacturing the negative electrode for the secondary battery according to an embodiment of the present disclosure. Referring to FIGS. 3a to 3c, as shown in FIG. 3a, the negative electrode active material 12 is placed on and below the porous polymer substrate 11, and as shown in FIG. 3b, the negative electrode active material 12 is pressed from the upper and lower surfaces of the porous polymer substrate 11 to compress the porous polymer substrate 11 and the negative electrode active material 12, yielding the negative electrode 10 for the secondary battery according to the present disclosure as shown in FIG. 3c.

FIG. 3c shows that the porous polymer substrate is completely covered by the negative electrode active material, and any part of the porous polymer substrate is not exposed to the outside of the negative electrode active material, and is not intended to signify that the porous polymer substrate in the negative electrode active material can be seen through.

A secondary battery according to an aspect of the present disclosure may include a positive electrode; a negative electrode; and a separator interposed between the positive electrode and the negative electrode, wherein the negative electrode may include the negative electrode for the secondary battery as described above.

In an embodiment of the present disclosure, the secondary battery may be a lithium-sulfur battery.

In an embodiment of the present disclosure, the positive electrode may include a positive electrode current collector and a positive electrode active material layer coated on one or two surfaces of the positive electrode current collector.

The positive electrode current collector may include, without limitation, those that support the positive electrode active material, and have high conductivity without causing chemical change to the corresponding battery. For example, the positive electrode current collector may include copper, stainless steel, aluminum, nickel, titanium, palladium, sintered carbon, copper or stainless steel treated with carbon, nickel or silver on the surface, or an aluminum-cadmium alloy.

The positive electrode current collector may have the microtextured surface to increase the bonding with the positive electrode active material, and may come in different forms, for example, film, sheet, foil, mesh, net, porous body, foam, and non-woven body.

The positive electrode active material layer may include a positive electrode active material and a binder polymer, and optionally, may further include a conductive material and/or an additive.

The positive electrode active material may include sulfur (S). In the specification, the material including sulfur is referred to as "sulfur-based compound." The sulfur-based compound may include, for example, any sulfur-containing compound that may be formed through reduction reaction of inorganic sulfur (S₈) or oxidation reaction of lithium sulfide (Li₂S), and more specifically, inorganic sulfur (S₈), lithium sulfide (Li₂ S), lithium polysulfide (Li₂Sx, an integer of 2 ≤ x ≤ 8), a disulfide compound, a carbon-sulfur polymer ((C₂S_{y})ₙ, y = 2.5 to 50, n ≥ 2), lithium sulfide (Li₂S) or two or more of them.

The positive electrode active material preferably may be a sulfur-carbon composite. The sulfur-carbon composite may include a porous carbon material; and the sulfur-based compound loaded into at least one of the inside of pores of the porous carbon material or the outer surface of the porous carbon material.

In an embodiment of the present disclosure, the porous carbon material may be used to provide the skeleton for loading the sulfur-based compound and immobilizing the sulfur-based compound uniformly and stably and improve the conductivity of the positive electrode, and may include any porous carbon material without limitation.

The porous carbon material may be generally produced by carbonizing precursors of a variety of carbon materials. The porous carbon material includes irregular pores inside, an average pore diameter may range from 1 nm to 200 nm, and a porosity may range from 10 vol% to 90 vol% of the total volume of the porous carbon material. When the average pore diameter is less than the aforementioned range, the pore size is only at the molecular level, making sulfur loading impossible, and on the contrary, when the average pore diameter is more than the aforementioned range, the mechanical strength of the porous carbon material is low, and it is unsuitable for use in the electrode manufacturing process.

The 'average pore diameter' may be measured by a known method for measuring the pore diameter of any porous material in the corresponding technical field, and the measurement method is not limited to a particular one. For example, the pore diameter may be measured by a scanning electron microscope (SEM), a field emission electron microscope, a laser diffraction method, or a Brunauer -Emmett-Teller (BET) method. The measurement using the laser diffraction method may be, for example, done using a commercially available laser diffraction particle size measurement device (for example, Microtrac MT 3000). In addition, the measurement by the BET method may be done using an analyzer, for example, BEL Japan's BELSORP series, but is not limited thereto.

The 'porosity' refers to a ratio of the volume occupied by pores in a structure to the total volume, and its unit is %, and the term may be used interchangeably with void fraction or void ratio. In the present disclosure, the measurement of the porosity is not limited to a particular method, and according to an embodiment of the present disclosure, the porosity may be, for example, measured by a BET method using nitrogen gas or Hg porosimeter and ASTM D2873.

The porous carbon material may have any shape commonly used in the lithium-sulfur battery, for example, spherical, rod-like, needle-like, platy, tubular or bulky shape, but is not limited thereto.

The porous carbon material may include, without limitation, those having a porous structure or high specific surface area, commonly used in the art. For example, the porous carbon material may include at least one selected from the group consisting of graphite; graphene; carbon black including Denka black, acetylene black, Ketjen black, channel black, furnace black, lamp black, and thermal black; carbon nanotubes (CNT) including single-walled carbon nanotubes (SWCNT), multi-walled carbon nanotubes (MWCNT); carbon fibers including graphite nanofibers (GNF), carbon nanofibers (CNF), activated carbon fibers (ACF); graphite including natural graphite, artificial graphite, expandable graphite, and activated carbon, but is not limited thereto. Preferably, the porous carbon material may include carbon nanotubes.

The method for manufacturing the sulfur-carbon composite is not limited to a particular one in the present disclosure, and may include any method commonly used in the art. For example, the sulfur and the porous carbon material may be simply mixed and thermally treated to form a composite.

In addition to the above-described composition, the positive electrode active material may further include at least one selected from transition metal elements, Group IIIA elements, Group IVA elements, sulfur compounds of these elements, and alloys of these elements and sulfur.

The transition metal elements may include Sc, Ti , V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In, Ti, and the Group IVA elements may include Ge, Sn, Pb.

The sulfur-carbon composite may be included in an amount of 50 wt% or more based on the total weight of the positive electrode. Specifically, the sulfur-carbon composite may be, for example, included in an amount of 80 wt% or more, 90 wt% or more, or 95 wt% or more based on the total weight of the positive electrode active material layer. Specifically, the sulfur-carbon composite may be included in an amount of from 80 wt% to 100 wt%, and more specifically from 85 wt% to 99 wt%, from 90 wt% to 99 wt%, from 95 wt% to 98 wt%, or from 95 wt% to 97 wt%, or 96 wt% based on the total weight of the positive electrode active material layer.

In an embodiment of the present disclosure, the binder polymer may be used to maintain the positive electrode active material to the positive electrode current collector and hold the positive electrode active material particles together to enhance the bonds between them, and may include any known binder polymer in the corresponding technical field.

For example, the binder polymer may include one selected from the group conssiting of a fluororesin-based binder including polyvinylidene fluoride (PVdF), polyvinylidene-based polymer including at least one vinylidene fluoride as a repeating unit, polytetrafluoroethylene (PTFE) or a mixture of two or more of them; a rubber-based binder including styrene butadiene rubber (SBR), acrylonitrile butadiene rubber, and styrene isoprene rubber; acrylic binder; a cellulose-based binder including carboxyl methyl cellulose (CMC), starch, hydroxy propyl cellulose, regenerated cellulose; a poly alcohol-based binder; a polylefin-based binder including polyethylene, polypropylene; a poly imide-based binder; a polyester-based binder; and a silane-based binder, or a mixture of two or more of them or a copolymer of two or more of them.

In an embodiment of the present disclosure, the amount of the binder may be 1 to 10 wt% of the total weight of the positive electrode active material layer. When the amount of the binder is less than the aforementioned range, the positive electrode may have poor physical properties, and the positive electrode active material and the conductive material may be debonded, and when the amount of the binder is more than the aforementioned range, the battery capacity may be reduced due to a smaller ratio of the positive electrode active material and the conductive material in the positive electrode, and accordingly, it is preferable to determine the optimal amount in the aforementioned range.

In an embodiment of the present disclosure, the conductive material is a material that electrically connects the electrolyte to the positive electrode active material and acts as a movement path of electrons from the current collector to the positive electrode active material, and may include, without limitation, any conductive material as the component of the electrode that is physically different from the carbon contained in the sulfur-carbon composite.

The conductive materials include, for example, carbon black such as Super-P, Denka black, acetylene black, Ketjen black, channel black, furnace black, lamp black, thermal black, carbon black; carbon derivatives such as carbon nanotubes or fullerene; conductive fibers such as carbon fibers or metal fibers; metal powder such as fluorocarbon, aluminum, and nickel powder; or conductive polymer such as polyaniline, polythiophene, polyacetylene, and polypyrrole, used singly or in combination.

In an embodiment of the present disclosure, the amount of the conductive material may be 1 wt% to 10 wt% of the total weight of the positive electrode active material. When the amount of the conductive material is less than the aforementioned range, voltage and capacity may be reduced due to slow electron transfer between the positive electrode active material and the current collector. On the contrary, when the amount of the conductive material is more than the aforementioned range, the total energy (amount of charge) of the battery may be reduced due to the lower ratio of the positive electrode active material, and accordingly it is preferable to determine the optimal amount in the aforementioned range.

In an embodiment of the present disclosure, the separator may be used to separate or insulate the positive electrode from the negative electrode and transport lithium ions between the positive electrode and the negative electrode, and may be made of a porous nonconductive or insulating material, and may include, without limitation, any separator commonly used in the lithium secondary battery. The separator may be an independent element such as a film, or a coating layer added to the positive electrode and/or the negative electrode.

The separator may preferably have low resistance to electrolyte ion migration and high wettability by the electrolyte.

In an embodiment of the present disclosure, the separator may include a porous substrate, and the porous substrate may include any porous substrate commonly used in the secondary battery, and the porous polymer film may be used singly or in stack, and for example, the porous substrate may include a nonwoven fabric made of high-melting-point glass fibers, polyethylene terephthalate fibers, or a polyolefin-based porous membrane, but is not limited thereto.

The porous substrate is not limited to a particular material in the present disclosure, and may include any porous substrate commonly used in the electrochemical device. For example, the porous substrate may include at least one selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene)benzobisoxazole and polyarylate.

In an embodiment of the present disclosure, the porous substrate is not limited to a particular thickness, but the thickness of the porous substrate may range from 1 µm to 100 µm, and preferably from 5 µm to 50 µm. The thickness range of the porous substrate is not limited to the aforementioned range, but when the thickness is excessively smaller than the aforementioned lower limit, the separator may be easily damaged during the use of the battery due to poor mechanical properties.

In an embodiment of the present disclosure, the porous substrate is not limited to a particular average pore diameter and porosity, but the average pore diameter may range from 0.001 µm to 50 µm and the porosity may range from 10 vol% to 95 vol%.

In an embodiment of the present disclosure, the separator may further include a porous coating layer on at least one surface of the porous substrate, the porous coating layer including inorganic particles and a binder.

In an embodiment of the present disclosure, the inorganic particles and the binder included in the porous coating layer may include those commonly used in the porous coating layer of the separator, and they are not limited to a particular manufacturing method.

Hereinafter, the present disclosure will be described in more detail through examples, but the following examples are provided to describe the present disclosure by way of example, and the scope of the present disclosure is not limited thereto.

### Example 1

### <Manufacture of negative electrode>

A substrate having a thickness of 60 µm and a lattice structure of polyethylene was prepared. In this instance, the polyethylene line width in the polyethylene lattice structure was 30 µm, the polyethylene line spacing was 135 µm, and the weight per area of the polyethylene lattice structure was 1.209 mg/cm².

A 60 µm-thick lithium metal foil was stacked on one surface of the substrate. The stack was rolled using a roll press to fill the polyethylene lattice structure with lithium metal.

### <Manufacture of secondary battery>

As a positive electrode active material, inorganic sulfur (S₈) and carbon nanotubes (CNT) were mixed to prepare a sulfur-carbon composite (a weight ratio sulfur:SWCNT= 75:25), and 96.0 wt% of the prepared sulfur-carbon composite and 4.0 wt% of polyacrylate (PAA) as a binder polymer were mixed to prepare a positive electrode slurry composition. The positive electrode slurry composition was coated on an aluminum current collector and dried to manufacture a positive electrode. The loading of the manufactured positive electrode was 3.5 mAh/cm².

The positive electrode and the negative electrode were placed with a polyethylene separator having a thickness of 16 µm and a porosity of 68 vol% interposed therebetween to prepare an electrode assembly.

The as-prepared electrode assembly was placed in a pouch-type case and an electrolyte solution, in which 1M lithium bis(trifluoromethanesulfonyl)imide (LiTFSI) and 1 wt% of lithium nitrate (LiNO₃) were dissolved in a solvent containing 1,3-dioxolane (DOL) and dimethyl ether (DME) at a volume ratio of 1:1, was injected to manufacture a lithium-sulfur battery.

### Example 2

A lithium -sulfur battery was manufactured by the same methods as in Example 1, except that a 30 µm-thick lithium metal foil was stacked on two surfaces of the polyethylene lattice structure and pressed.

### Comparative Example 1

A lithium-sulfur battery was manufactured by the same method as in Example 1, except that a 60 µm-thick lithium metal foil was used as the negative electrode.

### Comparative Example 2

A lithium-sulfur battery was manufactured by the same method as in Example 1, except that a 30 µm-thick lithium metal foil was laminated onto each of two surfaces of a 10 µm-thick copper current collector, and was used as the negative electrode.

### Comparative Example 3

A lithium-sulfur battery was manufactured by the same method as in Example 1, except that a 30 µm-thick lithium metal foil was laminated onto each of two surfaces of a polyethylene nonwoven fabric having a thickness of 60 µm and a porosity of 80%, and was used as the negative electrode.

### Comparative Example 4

A lithium-sulfur battery was manufactured by the same method as in Example 1, except that polyimide was used instead of polyethylene as the substrate of the negative electrode.

### Comparative Example 5

A polyethylene porous polymer substrate having a thickness of 60 µm, and a lattice structure having a line width of 30 µm, and a line spacing of 72 µm was prepared. A 60 µm-thick lithium metal foil was stacked on one surface of the substrate. The stack was rolled using a roll press. However, lithium metal was not filled into the porous polymer substrate, and the substrate was destroyed. This is because the narrow line spacing of the substrate made lithium metal intercalation difficult.

### Experimental Example 1: Tensile Strength Test

The results of measuring the tensile strength of the negative electrodes used in Example 1 and Comparative Examples 1 and 2 are shown in Table 1 below.

**[TABLE 1]**

| | Tensile strength (MPa) |
|---|---|
| Example 1 | 1.2 |
| Comparative Example 1 | 313.8 |
| Comparative Example 2 | 36.6 |

The tensile strength was measured using a universal testing machine (UTM) and a 20N load cell for each sample, and the measurement condition was a single strain rate of 0.01/s (18 mm/min).

Referring to TABLE 1, the measured tensile strength of the negative electrode used in Example 1 was at least 30 times greater than that of the negative electrode of Comparative Example 1 using only lithium metal as the negative electrode. Therefore, it was confirmed that the negative electrode according to the present disclosure had high mechanical strength of and high manufacturing process efficiency.

Meanwhile, the measured tensile strength of the negative electrode used in Example 1 was lower than that of the negative electrode used in Comparative Example 2. However, the tensile strength of the negative electrode used in Example 1 was high enough to achieve sufficient manufacturing process efficiency. In addition, the copper current collector was used in Comparative Example 2, and because the copper current collector is as heavy as 5.4 mg/cm², the lithium-sulfur battery of Comparative Example 2 had a significant reduction in energy density. In contrast, because the porous polymer substrate of the negative electrode used in Example 1 is as light as 1.209 mg/cm², it achieved sufficient mechanical strength and high energy density of the lithium-sulfur battery.

### Experimental Example 2: Cycle Life and Coulombic Efficiency Test

The lithium-sulfur batteries according to Examples 1 and 2 and Comparative Examples 1 to 4 were cycled at 0.2C charge and 0.3C discharge in CC mode at 25°C. In this instance, the upper and lower limits of charge and discharge were set to 2.5 V and 1.8 V, respectively.

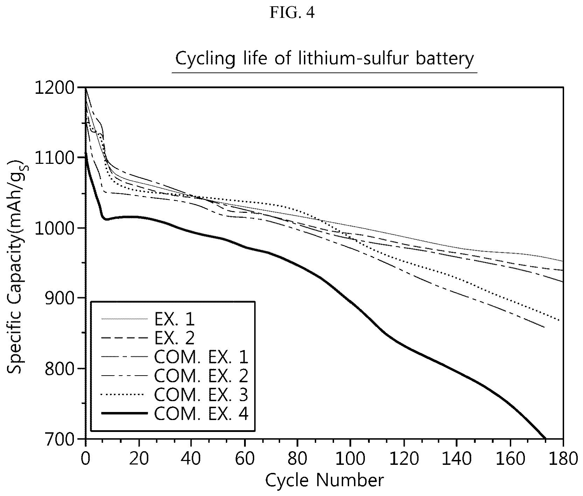

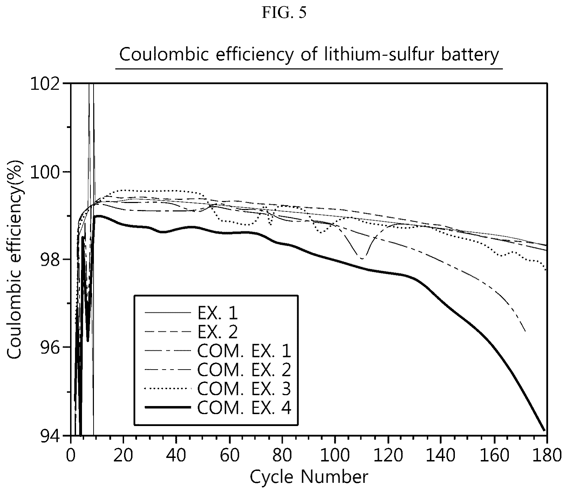

Additionally, the results of measuring the cycle life and Coulomb efficiency are shown in FIGS. 4 and 5.

Referring to FIGS. 4 and 5, it was confirmed that the lithium-sulfur batteries according to Examples 1 and 2 had the longest cycle life and highest coulombic efficiency.

It was confirmed that compared to Comparative Example 1 using the lithium metal foil as the negative electrode, Examples 1 and 2 including the porous polymer substrate improved the cycle life while maintaining Coulombic efficiency.

It was confirmed that compared to Comparative Example 2 using the copper current collector as the negative electrode, Examples 1 and 2 were superior in terms of Coulombic efficiency and cycle life.

It was confirmed that compared to Comparative Example 3 using the polyethylene nonwoven fabric having the non-fixed structure, Examples 1 and 2 were superior in terms of cycle life and Coulombic efficiency.

It was confirmed that compared to Comparative Example 4 using the polyimide as the porous polymer substrate, the lithium-sulfur batteries of Examples 1 and 2 were markedly superior in terms of cycle life and Coulombic efficiency. This is because the negative electrode degraded faster by reaction of the polyimide with the lithium metal.

### Experimental Example 3: Negative Electrode Thickness Increase Test

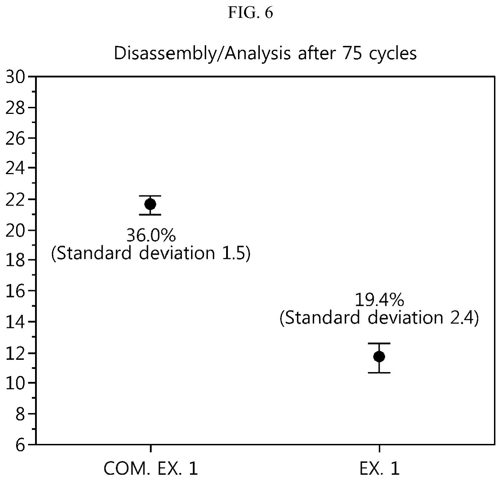

Three lithium-sulfur batteries according to each of Example 1 and Comparative Example 1 were prepared, and cycled at 0.2C charge and 0.3C discharge in CC mode at 25°C for 75 cycles. In this instance, the upper and lower limits of charge and discharge were 2.5 V and 1.8 V. Subsequently, each battery was disassembled, and the thickness of the negative electrode was measured using a thickness gauge (Mitutoyo, VL-50S-B), and the measurement results are shown in FIG. 6.

Referring to FIG. 6, it was confirmed that the lithium metal foil of Comparative Example 1 had a greater increase in negative electrode thickness than the negative electrode of Example 1.

Although the present disclosure has been hereinabove described with regard to a limited number of embodiments and drawings, the present disclosure is not limited thereto and it is obvious to those skilled in the art that various modifications and changes may be made thereto within the technical aspect of the present disclosure and the scope of the appended claims and their equivalents.

## Claims

1. A negative electrode for a secondary battery comprising:
a porous polymer substrate and a negative electrode active material,
wherein the porous polymer substrate has a lattice structure including a line portion and an open portion,
wherein each open portion of the porous polymer substrate is filled with the negative electrode active material in whole or in at least part, and
wherein the negative electrode active material includes at least one of a lithium metal and a lithium alloy.

2. The negative electrode for the secondary battery according to claim 1,
wherein the negative electrode for the secondary battery is a free-standing type without a current collector.

3. The negative electrode for the secondary battery according to claim 1,
wherein the porous polymer substrate has a line spacing of the line portion between 80 µm and 400 µm.

4. The negative electrode for the secondary battery according to claim 1,
wherein the porous polymer substrate has a line width of the line portion between 10 µm and 40 µm.

5. The negative electrode for the secondary battery according to claim 1,
wherein the lattice structure has a fixed structure having a constant spacing between the line portions.

6. The negative electrode for the secondary battery according to claim 1,
wherein a thickness of the porous polymer substrate ranges from 20 µm to 100 µm.

7. The negative electrode for the secondary battery according to claim 1,
wherein the porous polymer substrate includes polyester, polyolefin, polyethylene terephthalate or a mixture thereof.

8. The negative electrode for the secondary battery according to claim 1,
wherein the negative electrode includes the negative electrode active material loaded into 90 vol% or more of the open portion based on a total volume of the open portion of the porous polymer substrate.

9. The negative electrode for the secondary battery according to claim 1,
wherein at least part of the line portion is exposed to an outside on one surface or two surfaces of the negative electrode.

10. The negative electrode for the secondary battery according to claim 1,
wherein the porous polymer substrate is buried in the negative electrode active material.

11. The negative electrode for the secondary battery according to claim 1,
wherein the line portion is not exposed on one surface of the negative electrode and the line portion is exposed wholly or locally on an opposite surface of the negative electrode.

12. The negative electrode for the secondary battery according to claim 1,
wherein at least part of the porous polymer substrate is included in the negative electrode active material.

13. The negative electrode for the secondary battery according to claim 1,
wherein 80 wt% or more of the porous polymer substrate is included in the negative electrode active material.

14. A secondary battery comprising:
a positive electrode; a negative electrode; and a separator interposed between the positive electrode and the negative electrode,
wherein the negative electrode is defined in any one of claims 1 to 13, and
wherein the positive electrode includes sulfur as a positive electrode active material.

15. The secondary battery according to claim 14,
wherein the positive electrode includes a sulfur-carbon composite as the positive electrode active material.

16. The secondary battery according to claim 14,
wherein the secondary battery is a lithium-sulfur battery.
